Europäisches Patentamt

European Patent Office

Office européen des brevets

(11) Publication number: **0 205 224**
**A1**

(12) **EUROPEAN PATENT APPLICATION**

(21) Application number: **86201023.8**

(22) Date of filing: **12.06.86**

(51) Int. Cl.⁴: **B 65 G 53/48**

(30) Priority: **13.06.85 NL 8501710**

(43) Date of publication of application:
**17.12.86 Bulletin 86/51**

(84) Designated Contracting States:
**BE DE FR GB IT NL**

(71) Applicant: **B.M.I. B.V.**
**Laan van Overvliet 9**
**NL-3461 HE Linschoten(NL)**

(72) Inventor: **van Beek, Pieter Erich**
**c/o Laan van Overvliet 9**
**NL-3461 HE Linschoten(NL)**

(74) Representative: **Smulders, Theodorus A.H.J. et al,**
**Vereenigde Octrooibureaux Nieuwe Parklaan 107**
**NL-2587 BP 's-Gravenhage(NL)**

(54) **A pneumatic conveyor.**

㊐ A pneumatic conveyor for conveying from a hopper (6) moist loose material, such as floor mortar, a mixture of cement, sand and little water, via a hose to a place of use, said conveyor comprising a conveyor worm (3) terminating in a conical mixing chamber (10). Through the shaft (4) of the worm (3) there extends a pneumatic air supply channel (7) terminating in a spray nozzle (9) having an axial air outflow opening and radial air outflow openings which, in operation, deliver rotating radial air jets behind the axial exit of the nozzle (9), said jets disintegrating the material compacted in the worm (3) so that it can be entrained by the axial conveying air flow.

FIG.2

EP 0 205 224 A1

Title:    A pneumatic conveyor

The present invention relates to a pneumatic conveyor for conveying granular and or pulverulent material from a hopper by means of a conveying pipe, such as a conveying hose, to a place of use, comprising a worm conveyor conveying from the hopper to a mixing chamber co-extensive with the conveyor housing and tapering to an outlet passage connectable to the conveying pipe, while a pneumatic air supply channel extends through the shaft of the conveyor worm, terminating in a spray nozzle at the free end of the worm shaft, said nozzle being arranged coaxially relative to the mixing chamber, terminating axially in the mixing chamber while upstream of the outlet of the spray nozzle, air flow openings exiting from the central pneumatic air channel, terminate in the annulus surrounding the nozzle, as disclosed in DE-AS 2,817,798, Fig. 3.

In this apparatus designed for conveying dry powder, in particular cement, axial air supply is used to avoid dust development occurring in the air supplied transversely and likewise for producing a sub-atmospheric pressure by means of diverging air outflow openings terminating at the nozzle, through which pressure the dry loose material delivered by the conveyor worm is drawn in for further conveyance.

The prior art apparatus is unsuitable for the transport of moist material, such as floor mortar, composed of sand, cement and very little water, since the air jets exiting from the diverging openings are not adapted to draw in such moist mixtures having inferior rheological properties, certainly not when, as is the case in the known apparatus, the spray nozzle is stabilized by means of bars causing clogging.

Hitherto, consequently, use has been made of a different conveyor for pneumatically processing moist material, such as floor mortar, i.e. one comprising a mixing pan functioning as a pressure vessel. Sand, cement and water are supplied batchwise into the mixing pan through a top cover. A stirring device disposed within the pan mixes these raw materials. After closure of the cover, the vessel is brought under pressure with pneumatic air. The air leaves the mixing pan via the outlet passage and the discharge hose, thereby entraining the mixed material. During this process, a mixing arm passes the outlet passage so that the mortar exit takes place intermittently, thus preventing coagulation of the mixing material in front of the outlet opening. The mixture is thus conveyed batchwise to a receiving point, where it is shoveled into a barrow and brought to the processing location.

It is an object of the present invention to provide such an adapted pneumatic powder conveyor of the above described type that it is suitable for continuous pneumatic conveyance of so-called moist material.

To this end, according to the present invention, the spray nozzle and the end portion of the conveyor worm connected thereto are disposed within the conical mixing chamber and the air outflow openings 13 oriented radially, are arranged directly behind the mouth of the nozzle 9, communicating with upstream directed axial inlets.

Material delivered by the conveyor worm in the outflow pipe is continuously entrained directly by the pneumatic air delivered axially in the same place towards the conveying hose, with no chance of causing deposits and cloggings. Escape of pneumatic air via the helices of the conveyor worm rearwardly to the hopper can be prevented in otherwise known manner by compacting the material in the worm in helix interspaces narrowing towards the discharge end.

The material thus compacted is loosened in the outflow pipe by the radially outwardly directed air jets branched off from the axial supply.

The air jets blown from the lateral outflow openings cut the compacted conveyance material into lumps further reducible by the axial main stream. Thus, a uniform ratio conveying air/conveyance material can be set.

Moreover, for the purpose of preventing clogging in the outflow pipe, there may be provided a flexible lining of wear-resistant material having an air inlet terminating between the lining and the inner wall of the outflow pipe. Material deposition is prevented with certainty by blowing air intermittently behind the lining.

For the purpose of periodic cleaning operations, the outflow pipe may be fitted with a water supply connection at the exit of the spray nozzle.

By only sending a water/air mixture through the conveying hose, it can be cleaned for storage or for the purpose of pre-moistening surfaces along which mixing material is conveyed.

It is possible with the apparatus according to the present invention to convey moist material, such as floor mortar, directly from the hopper to the processing location where, e.g. floor mortar, can be directly distributed over the surface as required by the floorer. Intermediate transfers requiring additional manpower can be dispensed with. At the end of the hose, the outflow lance can be adjusted for spraying mixing material against vertical surface, with addition of chemicals.

It is observed that US-AS 3,099,496 discloses a conveyor having a worm and an air supply pipe extending through the worm and terminating in a conical mixing chamber having a central, porous dispersing tube and diverging air outflow pipes. In this apparatus adapted for conveying dry powder, the diverging air jets have to propel the powder lumps formed by compaction in the conveyor worm, while air is released from the porous dispersing tube which keeps the lumps in a whirling motion. This known apparatus is not adapted to convey moist material, since the moist lumps cannot be displaced by the whirling air.

One embodiment of the pneumatic conveyor according to the present invention will now be described, by way of example, with reference to the accompanying drawing, in which:

Fig. 1 shows the pneumatic conveyor partly in axial section and partly in elevational view; and

Fig. 2 is a view in conformity with Fig. 1 of a part of the apparatus on a larger scale.

As shown in the drawing, the pneumatic conveyor mounted on a frame 1 comprises a conveyor worm 3 rotatable in a housing 2, with a shaft 4 and a helix 5. Housing 2 is surmounted by a hopper 6.

In worm shaft 4 extends axially a pneumatic air passage 7 from a supply connection 8 to an axial nozzle 9.

A mixing chamber 10 in the form of a tapering outflow pipe is coupled to housing 2 through a flanged connection 11. Outflow pipe 11 embraces with the wide end the delivery end of the conveyor worm 3 and the nozzle 9. At the narrow end there is provided a stub 12 for a conveying hose, not shown.

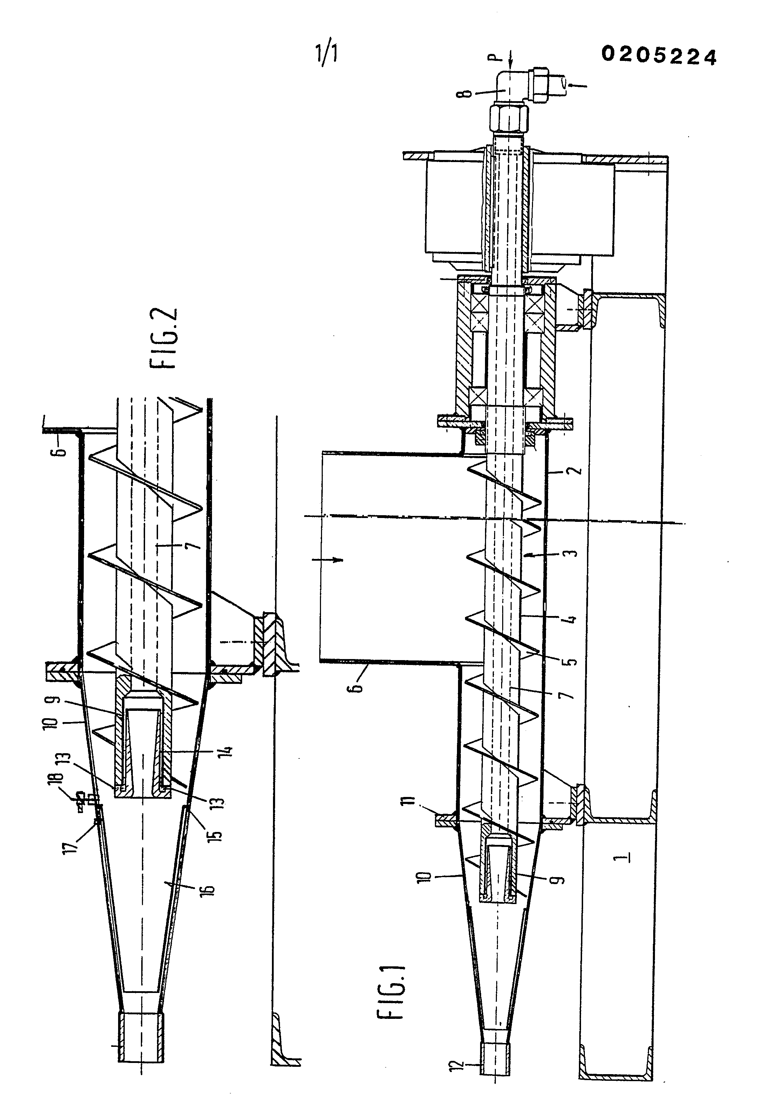

As appears more clearly from Fig. 2, nozzle 9 is fitted with laterally exiting air flow openings 13 fed from axial channels 14 communicating upstream with the central air passage 7.

A flexible, wear-resistant lining 16 disposed in the outflow pipe 10 at 15 protects the pipe 10, while adhesion of material to the lining 6 can be prevented by periodically blowing air through a connection 17 between the lining 16 and the wall of the outflow pipe 10.

For cleaning purposes, a water inlet 18 is connected to the outflow pipe 10 about at the exit of nozzle 9.

The operation of the apparatus according to the present invention is as follows:

The mixed material is deposited in hopper 6. Conveyor worm 3 conducts the mixture into outflow pipe 10, where it is entrained directly to the outlet passage 12 by pneumatic air supplied through the hollow worm shaft 4.

Air branched off via channels 14 from the central pneumatic air passage 7 flowsout laterally, i.e. radially or tangentially, in the form of air jets cutting the moist mixture slightly compacted in the last portion of the worm conveyor as it were into pieces, so that a better mixing with the axially outflowing conveying air is possible. The ratio blowing air/cutting air, if necessary, can be adjusted independently one from the other.

Compaction of the moist material in the last portion of the worm conveyor can be effected in otherwise known manner by either using a conveyor worm having a pitch decreasing towards the discharge end and/or as depicted in the drawing, by progressively reducing the space between successive helices of the worm conveyor. The compacted mass in the last portion of the conveyor prevents undesirable backflow of air to the hopper 6. The above mentioned cutting air jets stir up the compacted material again, so that clogging is prevented when mixing material and conveying air meet, thereby maintaining a uniform ratio conveying air/mixing material in the outflow pipe and in the conveying hose.

At the receiving location, at the end of the conveying hose, there may be provided a control knob by means of which first the supply of conveying air can be started, after which, through automatic adjustment after a given period of time, the conveyor worm 3 is put in action to supply material. After sufficient material has been received, the worm operation is disengaged via the control knob and after a given period of time, also the supply of conveying air is discontinued. Then, a predetermined quantity of material has been conveyed to the processing location without any material being abandoned in the conveyor.

**0205224**

## CLAIMS

1. A pneumatic conveyor for conveying moist granular and/or pulverulent material from a hopper by means of a conveying pipe, such as a conveying hose, to a place of use, comprising a worm conveyor conveying from the hopper to a mixing chamber (10) co-extensive with the conveyor housing (2), said mixing chamber tapering to an outlet passage (12) to which the conveying pipe is connectable, while through the shaft (4) of the worm (3) there extends a pneumatic air supply channel (7) terminating in a spray nozzle (9) at the free end of the worm shaft (2), said nozzle being arranged coaxially relative to the mixing chamber (10), and terminating axially in the mixing chamber (10), while upstream of the exit of the nozzle (9), air flow openings (13) exiting from the central pneumatic air channel (7), terminate in the annulus surrounding the nozzle (9), characterized in that the nozzle (9) and the end portion of the worm (3) connected thereto are disposed within the conical mixing chamber (10) and the air outflow openings (13), directed radially, are disposed directly behind the exit of the nozzle (9) and communicate with upstream directed axial inlets (14).

2. A conveyor according to claim 1, characterized in that a flexible lining 16 of wear-resistant material is provided in the end portion of the mixing chamber (10) functioning as an outflow pipe, with an air inlet (17) terminating between the lining (16) and the inner wall of the mixing chamber (10).

3. A conveyor according to claim 1 or 2, characterized in that a water supply connection (18) is disposed in the portion of the nozzle (9) within which the exit of the nozzle (9) is present.

FIG.2

FIG.1

1/1

0205224

**European Patent Office**

## EUROPEAN SEARCH REPORT

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl.4) |
| D,X | DE-A-2 817 798 (OFFICINE RIUNITE UDINE) * Page 7, line 7 - page 8, line 14; figures * | 1 | B 65 G 53/48 |
| D,A | US-A-3 093 419 (BOWERS) * Claims 1,5,6; figures * | 1 | |
| A | GB-A- 888 062 (SIMON HANDLING ENG.) * Page 2, lines 11-72; figures * | 2 | |
| A | US-A-3 099 496 (KAYSER) * Column 4, line 57 - column 5, line 15; figures * | 1 | |
| A | DE-A-2 622 076 (ARGE NASZSPRITSZBETON) * Page 7, lines 5-19; figures * | 3 | TECHNICAL FIELDS SEARCHED (Int. Cl.4) B 65 G |

The present search report has been drawn up for all claims

| Place of search | Date of completion of the search | Examiner |
|---|---|---|
| THE HAGUE | 03-09-1986 | VAN ROLLEGHEM F.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO Form 1503 03 82